# EUROPEAN PATENT APPLICATION

(11) **EP 4 236 469 A1**
(43) Date of publication of application: **30.08.2023**
(21) Application number: 20958078.6
(22) Date of filing: 21.10.2020
(51) Int. Cl.: H04W 40/22, H04W 36/00, H04W 28/02

(54) **ROUTING METHOD, APPARATUS AND SYSTEM**

(71) Applicant: FUJITSU LIMITED, Kawasaki-shi, Kanagawa 211-8588 (JP)
(72) Inventor: YI, Su, Beijing 100027 (CN); JIA, Meiyi, Beijing 100027 (CN); ZHANG, Lei, Beijing 100027 (CN); WANG, Xin, Beijing 100027 (CN)
(74) Representative: Haseltine Lake Kempner LLP
(86) International application number: PCT/CN2020/122441
(87) International publication number: WO 2022/082495

(57) **Abstract**

Embodiments of this disclosure provide a routing selection method and apparatus and a system. The method includes: a first node performs routing selection when at least one of the following conditions is satisfied that: a BH RLF indication is received from a second node; first flow control feedback information is received, and the first flow control feedback information indicates that data congestion occurs in a third node; a payload of a first egress BH RLC channel exceeds a desired level; and a payload corresponding to a first routing identity exceeds a desired level.

## Description

### Field

This disclosure relates to the field of communications.

### Background

Integrated access and backhaul (IAB) realizes a function of wireless relay in a next generation radio access network (NG-RAN). This relay node is referred to as an IAB node, which supports both access and backhaul (BH) via 5G New Radio (NR). All IAB nodes are connected to an IAB-donor via one or more hops. These multi-hop connections form a directed acyclic graph (DAG) topology with an IAB-donor as a root node. The IAB-donor is responsible for executing centralized resource management, topology management and routing management in an IAB network topology.

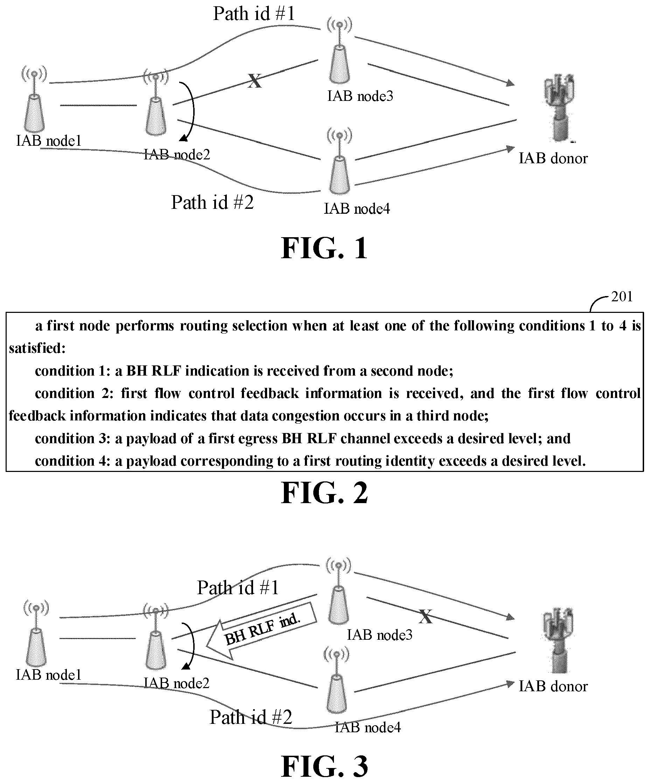

In an existing standard (3GPP Rel-16), when a radio link failure (RLF) occurs, the IAB node may select another path to realize routing reselection (re-routing). FIG 1 shows simple IAB network deployment, which includes four IAB nodes and one IAB-donor. When a backhaul radio link failure (BH RLF) occur in a link between IAB node 2 and IAB node 3, IAB node 2 may switch an uplink routing path from path 1 to path 2.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that fluctuations of data rates on different paths cause congestion on some paths, although other available paths that can reach the same destination actually have capacities. In existing standards, any specified data unit is transmitted on a fixed path. Even though selection may be performed on multiple paths after a BH RLF occurs, there is no good path reselection mechanism to improve flexibility of routing, avoid congested paths, or avoid selecting backhaul links with poor performances.

In order to solve at least one of the above problems or other similar problems, embodiments of this disclosure provide a routing selection method and apparatus and a system, so as to avoid loss of data, reduce congestion and realize payload equalization.

According to an aspect of the embodiments of this disclosure, there is provided a routing selection method, including:
a first node performs routing selection when at least one of the following conditions is satisfied that:
a BH RLF indication is received from a second node;
first flow control feedback information is received, and the first flow control feedback information indicates that data congestion occurs in a third node;
a payload of a first egress BH RLC channel exceeds a desired level; and
a payload corresponding to a first routing identity exceeds a desired level.

According to another aspect of the embodiments of this disclosure, there is provided a routing selection method, including:
a first node receives a first routing configuration message, the first routing configuration message including configuration information corresponding to multiple routing identities, and configuration information corresponding to each routing identity including at least one of the following: a priority, hops, and average delay.

According to a further aspect of the embodiments of this disclosure, there is provided a routing selection method, including:
an LAB donor transmits a first routing configuration message to a first node, the first routing configuration message being used for selecting a routing identity by the first node and including configuration messages corresponding to multiple routing identities, and a configuration message corresponding to each routing identity including at least one of the following: a priority, hops, and average delay.

According to still another aspect of the embodiments of this disclosure, there is provided a routing selection apparatus, configured in a IAB node in an IAB network, the apparatus including:
a selecting unit configured to perform routing selection when at least one of the following conditions is satisfied that:
a BH RLF indication is received from a second node;
first flow control feedback information is received, and the first flow control feedback information indicates that data congestion occurs in a third node;
a payload of a first egress BH RLC channel exceeds a desired level; and
a payload corresponding to a first routing identity exceeds a desired level.

According to yet another aspect of the embodiments of this disclosure, there is provided a routing selection apparatus, configured in an IAB node in an IAB network, the apparatus including:
a receiving unit configured to receive a first routing configuration message, the first routing configuration message including configuration information corresponding to multiple routing identities, and configuration information corresponding to each routing identity including at least one of the following: a priority, hops, and average delay.

According to yet still another aspect of the embodiments of this disclosure, there is provided a routing selection apparatus, configured in an IAB donor in an IAB network, the apparatus including:
a first transmitting unit configured to transmit a first routing configuration message to a first node, the first routing configuration message being used for selecting a routing identity by the first node and including configuration messages corresponding to multiple routing identities, and a configuration message corresponding to each routing identity including at least one of the following: a priority, hops, and average delay.

An advantage of the embodiments of this disclosure exists in that according to the embodiments of this disclosure, loss of data may be avoided, congestion may be reduced, and payload equalization may be realized. In particular, if local routing reselection decision is performed when a notification of a BH RLF is received, or congestion occurs in nearby nodes, or payload equalization is needed, network performances, such as delay, and data loss, etc., will be improved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts within several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG 1 is schematic diagram of IAB network deployment;
FIG 2 is a schematic diagram of an example of the routing selection method of an embodiment of a first aspect of this disclosure;
FIG 3 is a schematic diagram of an example of performing local routing reselection by an IAB node after receiving a BH RLF indication;
FIG 4 is a schematic diagram of an example of performing routing reselection by the IAB node after receiving flow control feedback information;
FIG 5 is a schematic diagram of an example of realizing payload equalization by the IAB node by performing routing reselection;
FIG 6 is a schematic diagram of an example of the routing selection method of an embodiment of a second aspect of this disclosure;
FIG 7 is a schematic diagram of an example of the routing selection method of an embodiment of a third aspect of this disclosure;
FIG 8 is a schematic diagram of an example of the routing selection apparatus of an embodiment of this disclosure;
FIG 9 is a schematic diagram of another example of the routing selection apparatus of the embodiment of this disclosure;
FIG 10 is a schematic diagram of a further example of the routing selection apparatus of the embodiment of this disclosure;
FIG 11 is a schematic diagram of an example of the communication system of an embodiment of this disclosure;
FIG 12 is a schematic diagram of an example of the IAB node of an embodiment of this disclosure; and
FIG 13 is a schematic diagram of an example of the IAB donor of an embodiment of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G 2.75G, 3G, 4G, 4.5G and 5G and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

According to an aspect of the embodiments of this disclosure, the embodiments of this disclosure may be used to improve routing selection of a BAP (backhaul adaptation protocol) sublayer. Implementations of the embodiments of this disclosure shall be described below with reference to the accompanying drawings, and these implementations are illustrative only, and are not intended to limit this disclosure.

In the following description, for the convenience of illustration, a 5G multi-hop IAB network deployment scenario is taken as an example. In this scenario, multiple LTEs are connected to an IAB donor via multi-hop IAB nodes, and finally accessed to a 5G network. Reference may be made to relevant technologies for definitions of the IAB node and IAB donor, which shall not be repeated herein any further. In addition, it should be noted that the above scenario is only an example of an implementation scenario of the embodiment of this disclosure, and is not intended to limit the embodiments of this disclosure.

In the embodiment of this disclosure, in wireless backhaul, an IP layer is carried over a BAP sublayer, and the BAP sublayer implements multi-hop routing. Routing enhancement includes BAP procedures for enhancement to utilization of path redundancy, such as local routing. Local routing refers to that in addition to dealing with a radio link failure, routing selection/reselection decisions may be made locally (that is, at an intermediate IAB node). Each destination BAP address may have multiple entries in a local routing table to help realize local routing selection. Therefore, local routing between IAB nodes may be realized by some enhancement technologies, such as local routing priorities, etc., so as to achieve payload balancing, reduce congestion, and optimize performances.

In the embodiment of this disclosure, the routing selection method may be referred to as local routing or local routing reselection (local re-routing), specifically, it refers to that when an IAB node makes routing decisions for BAP packets, it may not perform routing according to a routing identity (ID) contained in a BAP header (i.e. original routing). Specific actions of routing selection may be selection of a routing identity (routing ID), selection of entries in routing configuration, selection of a path identity (path ID), and selection of egress link.

### Embodiment of a first aspect

The embodiment of this disclosure provides a routing selection method, which shall be described from a side of an IAB node in an IAB network. For the sake of convenience of description, the IAB node is referred to as a first node. The method of the embodiment of the first aspect of this disclosure describes triggering conditions of routing selection.

FIG 2 is a schematic diagram of an example of the routing selection method of the embodiment of this disclosure. As shown in FIG 2, the method includes:
201: a first node performs routing selection when at least one of the following conditions 1 to 4 is satisfied:
condition 1: a BH RLF indication is received from a second node;
condition 2: first flow control feedback information is received, and the first flow control feedback information indicates that data congestion occurs in a third node;
condition 3: a payload of a first egress BH RLC channel exceeds a desired level; and
condition 4: a payload corresponding to a first routing identity exceeds a desired level.

According to the embodiment of this disclosure, data loss may be avoided, congestion may be reduced and payload balance may be realized, thereby improving network performances.

In the embodiment of this disclosure, the routing selection refers to at least one of following: selection of a routing identity, selection of entries in routing configuration, selection of a path identity, and selection of egress link.

In the embodiment of this disclosure, the data congestion refers to: that the first flow control feedback information indicates that an available buffer size of a BH RLC channel is lower than a first threshold, or that an available buffer size for a routing identity is lower than a second threshold.

In the embodiment of this disclosure, the first egress BH RLC channel may be an egress BH RLC channel obtained from BH RLC channel mapping configuration according to an egress link identity corresponding to a routing identity of a BAP header, an ingress link identity and an ingress BH RLC channel identity from which the BAP packet come.

In the embodiment of this disclosure, the first routing identity may be a routing identity contained in the BAP header.

In the embodiment of this disclosure, according to condition 1, the first node performs routing selection upon receiving a BH RLC indication. In some embodiments, when the first node receives the BH RLF indication from a second node, the first node performs routing selection, until RLF recovery of the first node is completed and the IAB donor performs routing reconfiguration for the first node.

In the embodiment of this disclosure, the second node may be a parent node of the first node. For example, if an IAB node (the first node) receives a BH RLF indication from its parent node (the second node), it triggers routing selection of uplink service, until RLF recovery of the IAB node is completed and the IAB donor performs routing reconfiguration for the IAB node. The routing reconfiguration for the IAB node may be performed by a donor-CU (centralized unit) of the IAB donor; however, this disclosure is not limited thereto, and it may also be performed by other units of the IAB donor.

FIG 3 is a schematic diagram of an example of performing local routing reselection by the IAB node after receiving the BH RLF indication. As shown in FIG 3, IAB node 3 (the second node) detects a BH RLF recovery failure at its IAB-MT (mobile termination) end, and transmits a BH RLF indication to its child node, i.e. IAB node 2 (the first node). When IAB node 2 receives the BH RLF indication from IAB node 3, which is one of parent nodes, it switches an uplink data transmission path from path 1 to path 2, until RLF recovery of IAB node 2 is completed, and the donor-CU of the IAB donor performs routing reconfiguration for IAB node 2.

In the above example, the above BH RLF indication may be transmitted in a form of a BAP control PDU (protocol data unit); however, this disclosure is not limited thereto.

In the embodiment of this disclosure, according to condition 2, the first node performs routing selection when traffic congestion occurs. That is, when the first node receives flow control feedback information (referred to as first flow control feedback information) and the flow control feedback information indicates that data congestion occurs in the third node, it performs routing selection. The flow control feedback information may possibly come from the third node, or may possibly come from any other nodes.

In the embodiment of this disclosure, the third node may be a parent node of the first node or a child node of the first node. That the third node is a child node of the first node is taken as an example. If an IAB node (the first node) receives a piece of flow control feedback information and the flow control feedback information indicates that data congestion occurs in another IAB node (the third node), this IAB node (the first node) may perform local routing selection.

In the embodiments of this disclosure, in some embodiments, that data congestion occurs may be that the above flow control feedback information indicates that an available buffer size of a BH RLC channel is lower than a first threshold, or that an available buffer size for a routing identity is lower than a second threshold.

In some embodiments, if the above flow control feedback information indicates that an available buffer size of a BH RLC channel is lower than a first threshold, the first node performs local routing reselection, which may be: performing routing reselection for a BAP packet that is intended to be routed to the above third node, for example, when performing routing selection for the BAP packet, a path routed to the above third node is not selected; or, performing routing reselection for a BAP packet that is intended to be mapped to the BH RLC channel, for example, when performing routing selection for the BAP packet, a path leading to the BH RLC channel is not selected.

In some embodiments, if the above flow control feedback information indicates that an available buffer size for a routing identity is lower than a second threshold, the first node performs local routing reselection, which may be: performing routing reselection for a BAP packet that is intended to be routed to the above third node, or, performing routing reselection for a BAP packet containing the above routing identity in the BAP header. The above routing identity may include a destination BAP address and a path identity; however, this disclosure is not limited thereto. The BAP address is also referred to as a DESTINATION in the BAP header.

In the above embodiment, the first threshold and the second threshold may be configured by the IAB donor for the first node; however, this disclosure is not limited thereto, and the first threshold and the second threshold may also be predefined or preconfigured.

In the above embodiment, the flow control feedback information may be triggered due to that a buffer payload exceeds a specified level, or may be a response to flow control polling.

For example, when a buffer payload of the third node exceeds a specified level, the third node or other nodes transmit(s) the flow control feedback information to the first node.

For another example, when the third node or other nodes receive(s) a flow control polling from the first node, it transmits the flow control feedback information on the third node to the first node.

In some embodiments, the above flow control polling and the above flow control feedback information are transmitted by a BAP control PDU of respective node.

In the embodiments of this disclosure, in some embodiments, a duration of the routing reselection may be determined by a timer. For example, a timer for routing reselection may be set. The timer is started when the first node determines according to condition 2 that data congestion occurs, and local routing reselection for a route where data congestion occurs is started when the timer is running. And after the timer expires, the local routing reselection for the route where data congestion occurs is disabled, that is, the routing reselection for the original route is stopped, and the original routing selection is recovered.

In the above embodiment, there may be multiple timers, each corresponding to a route where data congestion occurs. The multiple timers may run independently at the same time, indicating congestion times of different routes.

In the embodiments of this disclosure, in some embodiments, the duration of routing reselection may be determined by flow control feedback information (referred to as second flow control feedback information) indicating that no data congestion occurs in the original route. For example, when the first node receives the second flow control feedback information and the second flow control feedback information indicates that no data congestion occurs in the original route, the original routing selection is recovered and the routing reselection for the original route is stopped. In some embodiments, the first node may obtain the above flow control feedback information by transmitting a flow control polling to the third node; however, this disclosure is not limited thereto. In addition, if the first node receives flow control feedback information (i.e. the first flow control feedback information) indicating that data congestion occurs, the first node continues with new routing reselection for the original route. A specific implementation process is as described above, which shall not be repeated herein any further.

In the embodiment of this disclosure, the above two methods for determining the duration of the routing reselection may be implemented separately or in a combined manner. For example, when one of the above two methods for determining the duration of the routing reselection is satisfied, the local routing reselection for the original route is stopped.

In the embodiment of this disclosure, the original route is a general term. If the flow control feedback information (the first flow control feedback information or the second flow control feedback information) is for a routing identity, the original route refers to a route or path indicated by the BAP header of the BAP packet. If the flow control feedback information (the first flow control feedback information or the second flow control feedback information) is for a BH RLC channel, the original route refers to a route or path of a packet that is intended to be mapped to a BH RLC channel according to the route indicated by the BAP header of the BAP packet and mapping configuration of the BH RLC channel, which includes a part of one or more routes or path data that is mapped to the BH RLC channel.

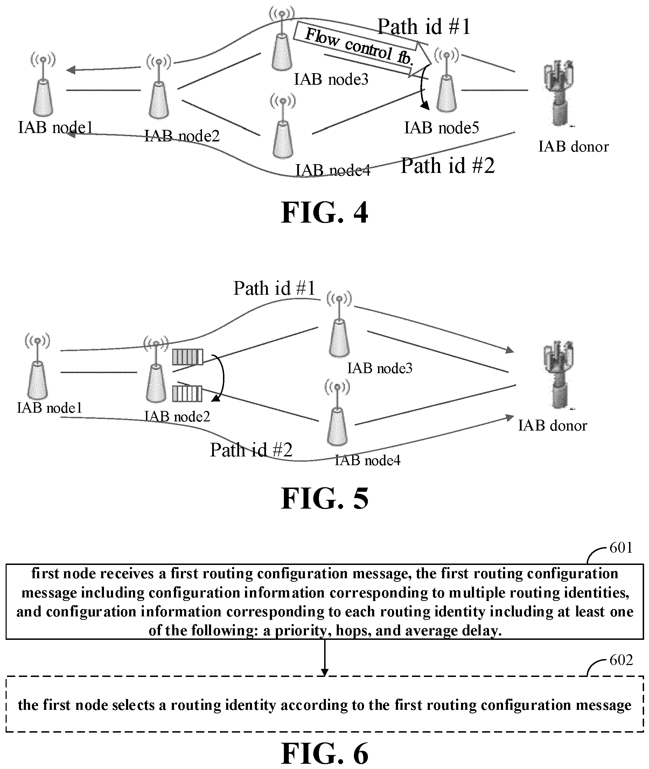

FIG 4 is a schematic diagram of an example of performing routing reselection by the LAB node after receiving the flow control feedback information. In this example, the third node transmits the flow control feedback information. As shown in FIG 4, when IAB node 5 (the first node) receives flow control feedback information of its child node, i.e. IAB node 3 (the third node) and the flow control feedback information indicates that data congestion occurs in IAB node 3, IAB node 5 performs rerouting reselection for downlink services and switches path 1 to path 2.

In the embodiment of this disclosure, according to condition 3, the first node performs routing selection when there is a requirement for payload balancing. That is, the first node performs routing selection when a payload of the first egress BH RLC channel exceeds a desired level.

In some embodiments, that the payload of the first egress BH RLC channel exceeds a desired level refers to: an available or desired buffer size of a first egress BH RLC channel on a first egress link is less than a third threshold, and an available buffer size of a second egress BH RLC channel on a second egress link is greater than a fourth threshold. Here, that the available buffer size is less than a third threshold may be that data amount in buffer is higher than a certain threshold, or a buffer occupation is higher than a certain threshold, etc. And that the available buffer size is higher than a fourth threshold may be that data amount in buffer is lower than a certain threshold, or the buffer occupation is lower than a certain threshold. And that the payload exceeds a desired level may also refer to that a difference between data amount in buffer corresponding to the first egress BH RLC channel and data amount in buffer corresponding to the second egress BH RLC channel is higher than a certain threshold.

In the above embodiments, in some embodiments, the identity of the second egress link is indicated by a next-hop BAP address IE (information element) corresponding to a routing ID in BH routing configuration, and the BAP address corresponding to the routing identity is identical to a DESTINATION in a BAP header of a current packet. Therefore, both the second egress link and the first egress link may be routed to identical BAP addresses.

In the above embodiments, in some embodiments, the second egress BH RLC channel is indicated by an egress BH RLC channel identity (*Egress BH RLC CH ID*) IE of an entry in the BH RLC channel mapping configuration, an ingress BH RLC channel identity of the entry matches an ingress BH RLC channel of the current BAP packet, an ingress link identity of the entry matches ingress link of the current BAP packet, and an egress link identity of the entry corresponds to the second egress link. Therefore, the second egress BH RLC channel is an egress BH RLC channel to which it is mapped according to configuration after selecting the second egress link.

FIG 5 is a schematic diagram of an example of realizing payload equalization by the IAB node by performing routing reselection. As shown in FIG 5, when a condition of an available buffer size of IAB node 2 is satisfied, that is, when an available or desired buffer size of a first egress BH RLC channel on a first egress link (an egress link corresponding to path 1) is lower than the third threshold and an available buffer size of a second egress BH RLC channel on a second egress link (an egress link corresponding to path 2) is higher than the fourth threshold, IAB node 2 reroutes an uplink service from path 1 to path 2.

An uplink service is taken as an example in FIG 5; however, this disclosure is not limited thereto, and the method of the embodiment of this disclosure is also applicable to a downlink service. For example, for the downlink service, a method is identical to that for the uplink service, and when an IAB node has multiple child nodes, it may perform routing reselection. The egress link and egress BH RLC channel of the IAB node are towards a direction of the child nodes, routing selection is also to select a route towards the direction of the child nodes.

In the above embodiment, the third threshold and the fourth threshold may be configured by the IAB donor for the first node; however, this disclosure is not limited thereto, and the third threshold and the fourth threshold may also be predefined or preconfigured.

In the embodiment of this disclosure, according to condition 4, the first node performs routing selection when there is a requirement for payload balancing. That is, the first node performs routing selection when a payload corresponding to a first routing identity exceeds a desired level.

In some embodiments, that the payload corresponding to a first routing identity exceeds a desired level refers to that: an available buffer size corresponding to the first routing identity is less than a fifth threshold, and an available buffer size corresponding to another routing identity having the same BAP address as the above routing identity is greater than a sixth threshold. Here, that the available buffer size is less than a fifth threshold may be that data amount in buffer is higher than a certain threshold, or a buffer occupation is higher than a certain threshold, etc. That the available buffer size is higher than a sixth threshold may be that data amount in buffer is lower than a certain threshold, or the buffer occupation is lower than a certain threshold. And that the payload exceeds a desired level may also refer to that a difference between data amount in buffer corresponding to the first routing identity and data amount in buffer of another routing identity having the same BAP address as the above routing identity is higher than a certain threshold.

Still taking FIG 5 as an example, when the conditions for the available buffer size of IAB node 2 are satisfied, that is, the available buffer size corresponding to the first routing identity (corresponding to path 1) is lower than the fifth threshold and the available buffer size corresponding to another routing identity (corresponding to path 2) having the same BAP address as the first routing identity is higher than the sixth threshold, IAB node 2 reroute the uplink service from path 1 to path 2.

Likewise, an uplink service is taken as an example in FIG 5; however, this disclosure is not limited thereto, and the method of the embodiment of this disclosure is also applicable to a downlink service.

In the above embodiment, the fifth threshold and the sixth threshold may be configured by the IAB donor for the first node; however, this disclosure is not limited thereto, and the fifth threshold and the sixth threshold may also be predefined or preconfigured.

According to the method of the embodiment of this disclosure, loss of data may be avoided, congestion may be reduced, and payload equalization may be realized, thereby improving network performances.

### Embodiment of a second aspect

The embodiment of this disclosure provides a routing selection method, which shall be described from a side of an IAB node in an IAB network. For the sake of convenience of description, the IAB node is referred to as a first node. The method of the embodiment of the second aspect of this disclosure describes a specific method of routing selection. Triggering conditions of the routing selection may be identical to those in the embodiment of the first aspect; however, this disclosure is not limited thereto. In a case where routing selection is triggered by other conditions, routing selection may be performed in the method of the embodiment of the second aspect of this disclosure.

FIG 6 is a schematic diagram of an example of the routing selection method of the embodiment of this disclosure. As shown in FIG 6, the method includes:
601: first node receives a first routing configuration message, the first routing configuration message including configuration information corresponding to multiple routing identities, and configuration information corresponding to each routing identity including at least one of the following: a priority, hops, and average delay.

According to the method of the embodiment of this disclosure, the IAB node (the first node) may be assisted in making local decisions in performing routing reselection by adding the above optional information elements or fields for each routing identity in the first routing configuration message.

In the embodiments of this disclosure, in some embodiments, the above "priority" is a routing priority recommended by an IAB donor CU (referred to as a donor-CU) to the IAB node. For example, for a number indicating "a priority", a larger number indicates that the route has a higher transmission performance in the donor-CU's view.

In the embodiments of this disclosure, in some embodiments, the above "hops" indicate remaining hops reaching a destination address in the routing identity, that is, how many hops remained to reach the destination address in the routing identity from the first node.

In the embodiments of this disclosure, in some embodiments, the above "average delay" refers to average peer-to-peer delay within a certain time window of a path corresponding to the routing identity observed by the IAB donor (such as the donor-CU of the IAB donor), which may be obtained in any measurement and reporting method.

In the embodiments of this disclosure, in some embodiments, the first routing configuration message may be provided by the IAB donor via F1AP (F1 application protocol) signaling; however, this disclosure is not limited thereto. Reference may be made to relevant technologies for a definition of the F1AP signaling, which shall not be repeated herein any further.

In some embodiments, as shown in FIG 6, the method further includes:
602: the first node selects a routing identity according to the first routing configuration message.

In the embodiment of this disclosure, the first routing configuration message may be a BAP mapping configuration message; however, this disclosure is not limited thereto.

Table 1 below gives an example of the BAP mapping configuration message. As shown in Table 1, a "priority" field, "hops" field and "average delay" field are added in the BAP mapping configuration message. In some embodiments, if the "priority" field is 0 (or another specific value, referred to as a first value), it means that the path ID may only be used in an RLF. In some embodiments, if the "priority" field is a value other than 0, it indicates a priority of a corresponding routing identity. Therefore, the first node may select a routing identity in performing routing selection according to the priority indicated by the other value.

**Table 1**

| IE/Group Name | **Presence** | **Range** | **Semantics description** |
|---|---|---|---|
| Message Type | M | | |
| Transaction ID | M | | |
| BH Routing Information Added List | | *0...1* | |
| >BH Routing Information Added List Item | | *1*.. | |
| | | *<maxnooJRou tingEntries>* | |
| >>BAP Routing ID | M | | |
| >>Next-Hop BAP Address | M | | Indicates the BAP address of the next hop IAB-node or IAB-donor-DU. |
| >>Priority | O | | If this field is 0, it indicates that this routing ID can only be used at RLF. |
| >>Hops | O | | Remaining number of hops towards destination |
| >>Average delay | O | | Average e2e delay for this path |
| ... | | | |

Table 1 is an example only, and in the BAP mapping configuration message, other entries or items may also be included.

In the embodiment of this disclosure, the first node obtains BH routing configuration according to the first routing configuration message. A principle of selecting a routing identity is to select a new routing identity with the same BAP address as the routing identity in the current BAP header in the BH routing configuration. If there are multiple routing IDs available, a routing identity with a high priority, fewer hops and low average delay may be selected, and a specific algorithm thereof is not limited.

In some embodiments, if routing selection is caused due to that a payload of a currently selected egress BH RLC channel (a first egress BH RLC channel) exceeds a desired level, the routing identity selected by the first node needs further to satisfy a condition as below:
an available buffer size of a first egress BH RLC channel on a currently selected first egress link (i.e. a first egress link corresponding to a routing identity specified in a current BAP header) is less than a third threshold, and an available buffer size of a second egress BH RLC channel on a second egress link corresponding to the selected routing identity is greater than a fourth threshold. This condition has been described in the embodiment of the first aspect, and shall not be described herein any further.

In the embodiment of this disclosure, the first egress BH RLC channel may be an egress BH RLC channel obtained from BH RLC channel mapping configuration according to an egress link ID corresponding to a routing identity of a BAP header, an ingress link ID and an ingress BH RLC channel ID from which the BAP packet come.

In some embodiments, if routing selection is caused due to that a payload corresponding to a current routing identity (the first routing identity) exceeds a desired level, the reselected routing identity needs further to satisfy a condition as below:
an available buffer size corresponding to the current routing identity (i.e. the routing identity specified in the current BAP header) is less than a fifth threshold, and an available buffer size corresponding to the selected routing identity is greater than a sixth threshold. This condition has been described in the embodiment of the first aspect, and shall not be described herein any further.

In the embodiment of this disclosure, the first routing identity may be a routing identity included in the BAP header.

It should be noted that FIG 6 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG 6.

According to the method of the embodiment of this disclosure, the network performances may be improved.

### Embodiment of a third aspect

The embodiment of this disclosure provides a routing selection method, which shall be described from a side of an IAB donor in an IAB network, with contents identical to those in the embodiment of the second aspect being not going to be repeated herein any further.

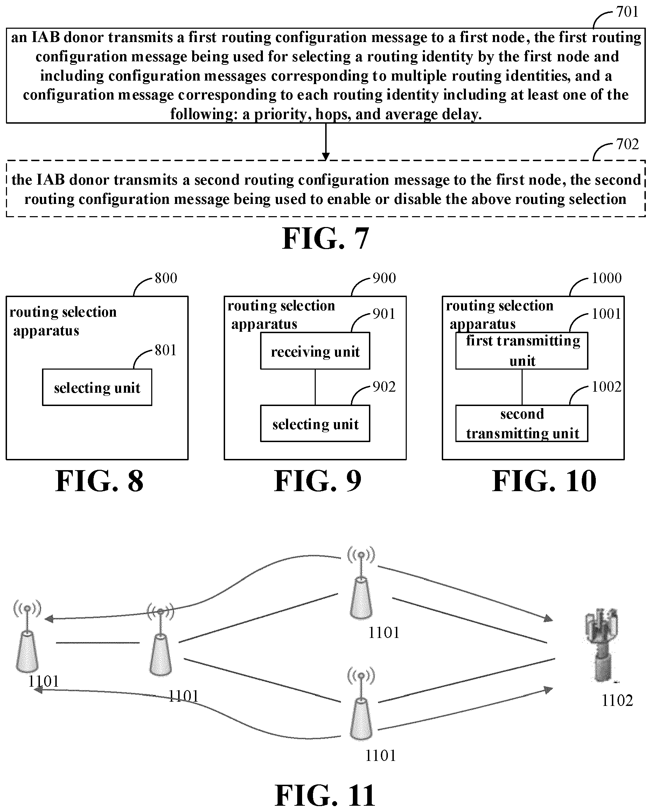

FIG 7 is a schematic diagram of an example of the routing selection method of the embodiment of this disclosure. As shown in FIG 7, the method includes:
701: an IAB donor transmits a first routing configuration message to a first node, the first routing configuration message being used for selecting a routing identity by the first node and including configuration messages corresponding to multiple routing identities, and a configuration message corresponding to each routing identity including at least one of the following: a priority, hops, and average delay.

In the embodiment of this disclosure, the first node is an IAB node in an IAB network, such as the IAB node in the embodiment of the first aspect, or an IAB node in the embodiment of the second aspect. According to the method of the embodiment of this disclosure, as a donor-CU usually has more information on the entire topology network, it has a higher authority over the IAB node. By transmitting a routing configuration message by the IAB donor to the IAB node, the IAB node (the first node) may be assisted in making local decisions in performing routing selection.

In this embodiment, meanings of "priority", "number of hops" and "average delay" are identical to those in the embodiment of the second aspect, which shall not be repeated herein any further. For example, information on the "priority" may be used to indicate whether local routing is allowed. For example, if a value of the priority is a first value, such as 0, a routing identity corresponding to this priority is only used in a case of BH RLF, and if the value of the priority is other than the first value, the value of the priority may be used to indicate a priority of a corresponding routing identity. Therefore, the first node may select a routing identity according to a priority indicated by the other value.

Therefore, the donor-CU may achieve local routing control with a finer granularity, such as disabling local selection of some routing identities, thereby improving flexibility of routing management.

In some embodiments, as shown in FIG 7, the method further includes:
702: the IAB donor transmits a second routing configuration message to the first node, the second routing configuration message being used to enable or disable the above routing selection.

In the above embodiment, the second routing configuration message may be information of 1 bit. Thus, the routing selection may be enabled or disabled via the information of 1 bit, thereby improving flexibility of routing management.

In the embodiment of this disclosure, the above first routing configuration information may further include hops and/or average delay, which may be realized via a BAP mapping configuration message. Relevant contents of the hops and average delay and contents of the BAP mapping configuration message have been described in the embodiment of the second aspect, and contents thereof are incorporated herein, which shall not be described herein any further.

According to the method of the embodiment of this disclosure, flexibility of routing management may be improved.

### Embodiment of a fourth aspect

The embodiment of this disclosure provides a routing selection apparatus. The apparatus may be an IAB node in an IAB network, or may be one or more parts or components configured in an IAB node. For the sake of convenience of description, the IAB node is referred to as a first node.

FIG 8 is a schematic diagram of an example of the routing selection apparatus of the embodiment of this disclosure. As principles of the apparatus are similar to that of the method in the embodiment of the first aspect, reference may be made to the implementation of the method in the embodiment of the first aspect for implementation of the apparatus, with identical contents being not going to be repeated herein any further. As shown in FIG 8, the routing selection apparatus 800 of the embodiment of this disclosure includes:
a selecting unit 801 configured to perform routing selection when at least one of the following conditions is satisfied that:
the first node receives a BH RLF indication from a second node;
the first node receives first flow control feedback information, and the first flow control feedback information indicates that data congestion occurs in a third node;
a payload of a first egress BH RLC channel exceeds a desired level; and
a payload corresponding to a first routing identity exceeds a desired level.

In the embodiment of this disclosure, the second node may be a parent node of the first node, and the third node may be a child node of the first node; however, this disclosure is not limited thereto.

In some embodiments, the selecting unit 801 performs routing selection when the first node receives the BH RLF indication from the second node, until RLF recovery of the first node is completed and the IAB donor performs routing reconfiguration for the first node.

In some embodiments, that the selecting unit 801 performs routing selection when the first node receives first flow control feedback information and the first flow control feedback information indicates that data congestion occurs in the third node, including:
if the first flow control feedback information indicates that an available buffer size of a BH RLC channel is lower than a first threshold or an available buffer size for a routing identity is lower than a second threshold, the selecting unit 801performs routing reselection for a BAP packet that is intended to be routed to the third node.

In some embodiments, that the selecting unit 801 performs routing selection when the first node receives first flow control feedback information and the first flow control feedback information indicates that data congestion occurs in the third node, including:
if the first flow control feedback information indicates that an available buffer size of a BH RLC channel is lower than a first threshold, the selecting unit 801performs outing reselection for a BAP packet that is intended to be routed to the BH RLC channel;
and if the first flow control feedback information indicates that an available buffer size for a routing identity is lower than a second threshold, the selecting unit 801performs routing reselection for a BAP packet containing the above routing identity in its BAP header.

In some embodiments, if at least one of the following conditions is satisfied, the selecting unit 801 stops routing reselection for an original route:
a timer started when the data congestion occurs expires; and
second flow control feedback information is received, and the second flow control feedback information indicates that no data congestion occurs in the original route.

In some embodiments, if the first flow control feedback information is for a routing identity, the original route refers to a route or path where the data congestion occurs; and if the first flow control feedback information is for a BH RLC channel, the original route refers to a route or path of a packet that is intended to be mapped to a BH RLC channel where the data congestion occurs.

In some embodiments, the route or path of the packet of the BH RLC channel where the data congestion occurs includes a part in one or more routes or path data that is mapped to the BH RLC channel.

In some embodiments, that a payload of a first egress BH RLC channel exceeds a desired level refers to: an available buffer size of a first egress BH RLC channel on a first egress link is less than a third threshold, and an available buffer size of a second egress BH RLC channel on a second egress link is greater than a fourth threshold.

In some embodiments, the identity of the second egress link is indicated by a next-hop BAP address IE corresponding to a routing ID in BH routing configuration, and the BAP address corresponding to the routing identity is identical to a DESTINATION in a BAP header of a current packet.

In some embodiments, the second egress BH RLC channel is indicated by an egress BH RLC channel identity IE of an entry in the BH RLC channel mapping configuration, an ingress BH RLC channel identity of the entry matches an ingress BH RLC channel of the current BAP packet, an ingress link identity of the entry matches ingress link of the current BAP packet, and an egress link identity of the entry corresponds to the second egress link.

In some embodiments, the third threshold and the fourth threshold are configured by the IAB donor for the first node.

In some embodiments, that a payload corresponding to a first routing identity exceeds a desired level refers to that: an available buffer size corresponding to the first routing identity is less than a fifth threshold, and an available buffer size corresponding to another routing identity having the same BAP address as the first routing identity is greater than a sixth threshold.

In some embodiments, the fifth threshold and the sixth threshold are configured by the IAB donor for the first node.

FIG 9 is a schematic diagram of another example of the routing selection apparatus of the embodiment of this disclosure. As principles of the apparatus are similar to that of the method in the embodiment of the second aspect, reference may be made to the implementation of the method in the embodiment of the second aspect for implementation of the apparatus, with identical contents being not going to be repeated herein any further. As shown in FIG 9, the routing selection apparatus 900 of the embodiment of this disclosure includes:
a receiving unit 901 configured to receive a first routing configuration message, the first routing configuration message including configuration information corresponding to multiple routing identities, and configuration information corresponding to each routing identity including at least one of the following: a priority, hops, and average delay.

In some embodiments, as shown in FIG 9, the apparatus 900 further includes:
a selecting unit 902 configured to select a routing identity according to the first routing configuration message.

In some embodiments, the first routing configuration message is provided by the IAB donor via F1AP signaling.

In some embodiments, the priority is a priority of a route recommended by a IAB donor to the first node; the hops indicate the remaining number of hops reaching a destination address in the routing identity; and the average delay refers to average end-to-end delay for a path corresponding to the routing identity observed by the IAB donor within a time window.

In some embodiments, if a value of the priority is a first value, a routing identity corresponding to the priority is used only in a case of BH RLF; and if a value of the priority is another value than the first value, the value of the priority indicates a priority of a corresponding routing identity, and the first node performs routing selection according a priority indicated by the another value.

In some embodiments, if routing selection is caused due to that a payload of a first egress BH RLC channel exceeds a desired level, the selected routing identity needs further to satisfy a condition as below:
an available buffer size of a first egress BH RLC channel on a first egress link is less than a third threshold, and an available buffer size of a second egress BH RLC channel on a second egress link corresponding to the selected routing identity is greater than a fourth threshold.

In some embodiments, if routing selection is caused due to that a payload corresponding to a first routing identity exceeds a desired level, the selected routing identity needs further to satisfy a condition as below:
an available buffer size corresponding to the first routing identity is less than a fifth threshold, and an available buffer size corresponding to the selected routing identity is greater than a sixth threshold.

In the embodiment of this disclosure, the first egress BH RLC channel may be an egress BH RLC channel obtained from BH RLC channel mapping configuration according to an egress link identity corresponding to a routing identity of a BAP header, an ingress link identity and an ingress BH RLC channel identity from which the BAP packet come.

In the embodiment of this disclosure, the first routing identity may be a routing identity contained in the BAP header.

It should be noted that the components or modules related to this disclosure are only described above. However, this disclosure is not limited thereto, and the routing selection apparatuses 800/900 of the embodiment of this disclosure may further include other components or modules, and reference may be made to related techniques for particulars of these components or modules.

Furthermore, for the sake of simplicity, connection relationships between the components or modules or signal profiles thereof are only illustrated in Figs 8 and 9. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the embodiment of this disclosure, the network performances may be improved.

### Embodiment of a fifth aspect

The embodiment of this disclosure provides a routing selection apparatus. The apparatus may be an IAB donor in an IAB network, or may be one or more parts or components configured in an IAB donor.

FIG 10 is a schematic diagram of an example of the routing selection apparatus of the embodiment of this disclosure. As shown in FIG 10, the routing selection apparatus 1000 of the embodiment of this disclosure includes:
a first transmitting unit 1001 configured to transmit a first routing configuration message to a first node, the first routing configuration message being used for selecting a routing identity by the first node and including configuration messages corresponding to multiple routing identities, and a configuration message corresponding to each routing identity including at least one of the following: a priority, hops, and average delay.

In some embodiments, as shown in FIG 10, the apparatus 1000 further includes:
a second transmitting unit configured to transmit a second routing configuration message to the first node, the second routing configuration message being used for enabling or disabling the routing selection.

In the above embodiment, the second routing configuration message is information of 1 bit.

In some embodiments, the priority is a routing priority recommended by the IAB donor to the IAB node; the hops indicate remaining hops reaching a destination address in the routing identity, and the average delay refers to average peer-to-peer delay within a certain time window of a path corresponding to the routing identity observed by the IAB donor.

In some embodiments, if a value of the priority is a first value, a routing identity corresponding to the priority is used only in a case of BH RLF; and if a value of the priority is another value than the first value, the value of the priority indicates a priority of a corresponding routing identity, and the first node performs routing selection according a priority indicated by the another value.

It should be noted that the components or modules related to this disclosure are only described above. However, this disclosure is not limited thereto, and the routing selection apparatus 1000 of the embodiment of this disclosure may further include other components or modules, and reference may be made to related techniques for particulars of these components or modules.

Furthermore, for the sake of simplicity, connection relationships between the components or modules or signal profiles thereof are only illustrated in FIG 10. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the embodiment of this disclosure, the network performances may be improved.

### Embodiment of a sixth aspect

The embodiment of this disclosure provides a communication system.

FIG 11 is a schematic diagram of an example of the communication system of the embodiment of this disclosure. As shown in FIG 11, the communication system 1100 of the embodiment of this disclosure includes IAB nodes 1101 and an IAB donor 1102. For the sake of simplicity, an example having only four IAB nodes 1101 and one IAB donor 1102 is given in FIG 11; however, the embodiment of this disclosure is not limited thereto. For example, the communication system 1100 may further include a terminal equipment (not shown). Reference may be made to relevant techniques for network architectures of the terminal equipment, IAB nodes 1101 and IAB donor 1102, which shall not be described herein any further.

In the embodiment of this disclosure, existing traffics or traffics that may be implemented in the future may be performed between the IAB nodes 1101 and the terminal equipment. For example, such traffics may include but not limited to enhanced mobile broadband (eMBB), massive machine type communication (mMTC), ultra-reliable and low-latency communication (URLLC), and vehicle to everything (V2X), etc.

In some embodiments, the IAB nodes 1101 are configured to carry out the method described in the embodiment of the first or second aspect. In some embodiments, the IAB donor 1102 is configured to carry out the method described in the embodiment of the third aspect. Reference may be made to the embodiments of the first to third aspects for specific contents of the IAB nodes 1101 and IAB donor 1102, which shall not be described herein any further.

The embodiment of this disclosure further provides an IAB node.

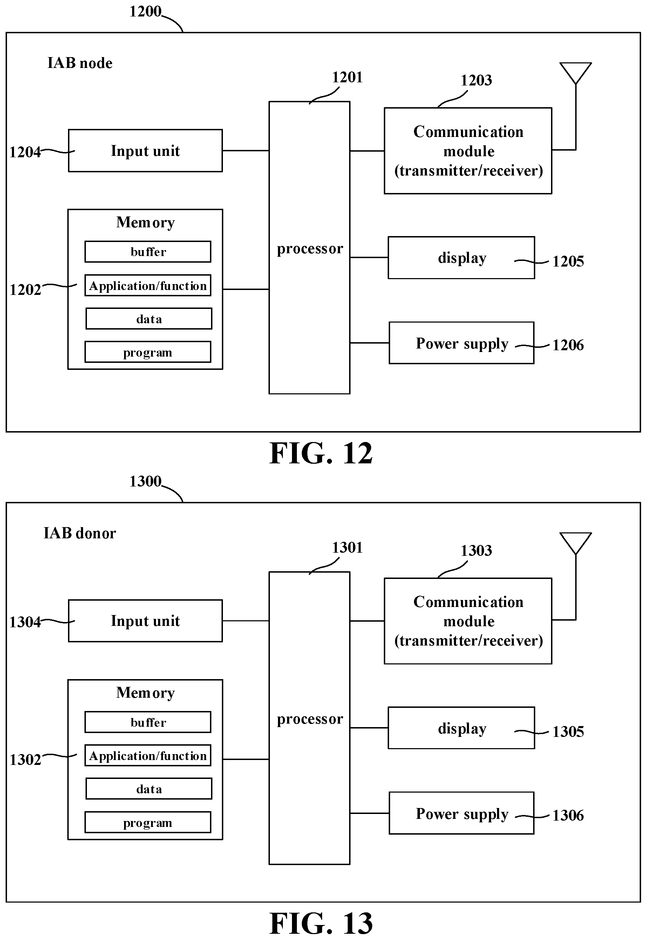

FIG 12 is a schematic diagram of an example of the IAB node of the embodiment of this disclosure. As shown in FIG 12, the IAB node 1200 may include a processor 1201 and a memory 1202, the memory 1202 storing data and programs and being coupled to the processor 1201. It should be noted that this figure is illustrative only, and other types of structures may also be used, so as to supplement or replace this structure and achieve a telecommunications function or other functions.

For example, the processor 1201 may be configured to execute a program to carry out the method as described in the embodiment of the first or second aspect.

As shown in FIG 12, the IAB node 1200 may further include a communication module 1203, an input unit 1204, a display 1205, and a power supply 1206; wherein functions of the above components are similar to those in the related art, which shall not be described herein any further. It should be noted that the IAB node 1200 does not necessarily include all the parts shown in FIG 12, and the above components are not necessary. Furthermore, the IAB node 1200 may include parts not shown in FIG 12, and the related art may be referred to.

The embodiment of this disclosure further provides an IAB donor.

FIG 13 is a schematic diagram of an example of the IAB donor of the embodiment of this disclosure.

As shown in FIG 13, the IAB donor 1300 may include a processor 1301 and a memory 1302, the memory 1302 storing data and programs and being coupled to the processor 1301. It should be noted that this figure is illustrative only, and other types of structures may also be used, so as to supplement or replace this structure and achieve a telecommunications function or other functions.

For example, the IAB donor 1300 may be configured to execute a program to carry out the method as described in the embodiment of the third aspect.

As shown in FIG 13, the IAB donor 1300 may further include a communication module 1303, an input unit 1304, a display 1305, and a power supply 1306; wherein functions of the above components are similar to those in the related art, which shall not be described herein any further. It should be noted that the IAB donor 1300 does not necessarily include all the parts shown in FIG. 13, and the above components are not necessary. Furthermore, the IAB donor 1300 may include parts not shown in FIG 13, and the related art may be referred to.

An embodiment of this disclosure provides a computer readable program, which, when executed in an IAB node, causes a computer to carry out the method as described in the embodiment of the first or the second aspect in the IAB node.

An embodiment of this disclosure provides a storage medium storing a computer readable program, which causes a computer to carry out the method as described in the embodiment of the first or the second aspect in an IAB node.

An embodiment of this disclosure provides a computer readable program, which, when executed in an IAB donor, causes a computer to carry out the method as described in the embodiment of the third aspect in the IAB donor.

An embodiment of this disclosure provides a storage medium storing a computer readable program, which causes a computer to carry out the method as described in the embodiment of the third aspect in an IAB donor.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to the implementations disclosed in the embodiments, following supplements are further disclosed.
1. A routing selection method, including:
   performing routing selection by a first node when at least one of the following conditions is satisfied that:
   a BH RLF indication is received from a second node;
   first flow control feedback information is received, and the first flow control feedback information indicates that data congestion occurs in a third node;
   a payload of a first egress BH RLC channel exceeds a desired level; and
   a payload corresponding to a first routing identity exceeds a desired level.
   1a. The method according to supplement 1, wherein the routing selection refers to at least one of the following: selection of a routing identity, selection of entries in routing configuration, selection of a path identity, and selection of egress link.
   1b. The method according to supplement 1, wherein the data congestion refers to: that the first flow control feedback information indicates that an available buffer size of a BH RLC channel is lower than a first threshold, or that an available buffer size for a routing identity is lower than a second threshold.
   1c. The method according to supplement 1, wherein the first egress BH RLC channel is an egress BH RLC channel obtained from BH RLC channel mapping configuration according to an egress link identity corresponding to a routing identity of a BAP header, an ingress link identity and an ingress BH RLC channel identity from which the BAP packet come.
   1d. The method according to supplement 1, wherein the first routing identity is a routing identity contained in a BAP header.
2. The method according to supplement 1, wherein that the payload of a first egress BH RLC channel exceeds a desired level refers to that:
   an available buffer size of a first egress BH RLC channel on a first egress link is less than a third threshold, and an available buffer size of a second egress BH RLC channel on a second egress link is greater than a fourth threshold.
3. The method according to supplement 1, wherein that the payload corresponding to a first routing identity exceeds a desired level refers to that:
   an available buffer size corresponding to the first routing identity is less than a fifth threshold, and an available buffer size corresponding to another routing identity having the same BAP address as the first routing identity is greater than a sixth threshold.
4. The method according to supplement 1, wherein the first node performs routing selection when the BH RLF indication is received from the second node, until RLF recovery of the first node is completed and an IAB donor performs routing reconfiguration for the first node.
5. The method according to supplement 1, wherein that the first node performs routing selection when the first flow control feedback information is received and the first flow control feedback information indicates that data congestion occurs in a third node includes:
   the first node reselects a route for a BAP packet intended to be routed to the third node if the first flow control feedback information indicates that an available buffer size of a BH RLC channel is less than a first threshold or indicates that an available buffer size for a routing identity is less than a second threshold.
6. The method according to supplement 1, wherein that the first node performs routing selection when the first flow control feedback information is received and the first flow control feedback information indicates that data congestion occurs in a third node includes:
   the first node reselects a route for a BAP packet intended to be mapped to a BH RLC channel if the first flow control feedback information indicates that an available buffer size of the BH RLC channel is less than a first threshold; and
   the first node reselects a route for a BAP packet containing a routing identity in a BAP header if the first flow control feedback information indicates that an available buffer size for a routing identity is less than a second threshold.
7. The method according to supplement 1, wherein after the first node performs routing reselection when the first flow control feedback information is received and the first flow control feedback information indicates that data congestion occurs in a third node, the method further includes:
   stopping the routing reselection for an original route if at least one of the following conditions is satisfied that:
   a timer started when the data congestion occurs expires; and
   second flow control feedback information is received, and the second flow control feedback information indicates that no data congestion occurs in the original route.
8. The method according to supplement 7, wherein,
   if the first flow control feedback information is for a routing identity, the original route refers to a route or path where the data congestion occurs;
   and if the first flow control feedback information is for a BH RLC channel, the original route refers to a route or path of a packet that is intended to be mapped to a BH RLC channel where the data congestion occurs.
9. The method according to supplement 8, wherein the route or path of the packet of the BH RLC channel where the data congestion occurs includes a part in one or more routes or path data that is mapped to the BH RLC channel.
10. The method according to supplement 2, wherein an identity of the second egress link is indicated by a next hop BAP address IE corresponding to a routing identity in BH routing configuration, and a BAP address corresponding to the routing identity is same as a DESTINATION in a BAP header of a current packet.
11. The method according to supplement 2, wherein the second egress BH RLC channel is indicated by an egress BH RLC channel identity IE of an entry in BH RLC channel mapping configuration, an ingress BH RLC channel identity of the entry matching an ingress BH RLC channel of a current BAP packet, an ingress link identity of the entry matching ingress link of the current BAP packet, and an egress link identity of the entry corresponding to the second egress link.
12. The method according to supplement 2, wherein the third threshold and the fourth threshold are configured by an IAB donor for the first node.
13. The method according to supplement 3, wherein the fifth threshold and the sixth threshold are configured by an IAB donor for the first node.
14. A routing selection method, wherein the method includes:
   receiving a first routing configuration message by a first node, the first routing configuration message including configuration information corresponding to multiple routing identities, and configuration information corresponding to each routing identity including at least one of the following: a priority, hops, and average delay.
15. The method according to supplement 14, wherein the method further includes:
   selecting a routing identity by the first node according to the first routing configuration message.
   15a. The method according to supplement 15, wherein,
   if routing selection is caused due to that a payload of a first egress BH RLC channel exceeds a desired level, the selected routing identity satisfies a condition as below:
      an available buffer size of a first egress BH RLC channel on a first egress link is less than a third threshold, and an available buffer size of a second egress BH RLC channel on a second egress link corresponding to the selected routing identity is greater than a fourth threshold.
      15b. The method according to supplement 15, wherein,
      if routing selection is caused due to that a payload corresponding to a first routing identity exceeds a desired level, the selected routing identity satisfies a condition as below:
         an available buffer size corresponding to the first routing identity is less than a fifth threshold, and an available buffer size corresponding to the selected routing identity is greater than a sixth threshold.
16. The method according to supplement 14, wherein the first routing configuration message is provided by an IAB donor via F1AP signaling.
17. The method according to supplement 14, wherein,
   the priority is a priority of a route recommended by a IAB donor to the first node;
   the hops indicate the remaining number of hops reaching a destination address in the routing identity;
   and the average delay refers to an average end-to-end delay for a path corresponding to the routing identity observed by the IAB donor within a time window.
18. The method according to supplement 14 or 17, wherein,
   if a value of the priority is a first value, a routing identity corresponding to the priority is used only in a case of BH RLF;
   and if a value of the priority is another value than the first value, the value of the priority indicates a priority of a corresponding routing identity, and the first node performs routing selection according a priority indicated by the another value.
19. A routing selection method, wherein the method includes:
   transmitting a first routing configuration message by an IAB donor to a first node, the first routing configuration message being used for selecting a routing identity by the first node and including configuration messages corresponding to multiple routing identities, and a configuration message corresponding to each routing identity including at least one of the following: a priority, hops, and average delay.
20. The method according to supplement 19, wherein the method further includes:
   transmitting a second routing configuration message to the first node, the second routing configuration message being used for enabling or disabling the routing selection.
21. The method according to supplement 20, wherein the second routing configuration message is information of 1 bit.
22. The method according to supplement 19, wherein,
   the priority is a priority of a route recommended by a IAB donor to the first node;
   the hops indicate the remaining number of hops reaching a destination address in the routing identity;
   and the average delay refers to an average end-to-end delay for a path corresponding to the routing identity observed by the IAB donor within a time window.
23. The method according to supplement 19 or 22, wherein,
   if a value of the priority is a first value, a routing identity corresponding to the priority is used only in a case of BH RLF;
   and if a value of the priority is another value than the first value, the value of the priority indicates a priority of a corresponding routing identity, and the first node performs routing selection according a priority indicated by the another value.
24. An IAB node in an IAB network, including a memory and a processor, the memory storing a computer program, wherein the processor is configured to execute the computer program to carry out the method described in any one of supplements 1-18.
25. An LAB donor in an IAB network, including a memory and a processor, the memory storing a computer program, wherein the processor is configured to execute the computer program to carry out the method described in any one of supplements 19-23.
26. A communication system, including an IAB node and an IAB donor, wherein the IAB node is configured to carry out the method described in any one of supplements 1-18, and the IAB donor is configured to carry out the method described in any one of supplements 19-23.

## Claims

1. A routing selection apparatus, configured in a first node, the apparatus comprising:
a selecting unit configured to perform routing selection when at least one of the following conditions is satisfied that:
a BH RLF indication is received from a second node;
first flow control feedback information is received, and the first flow control feedback information indicates that data congestion occurs in a third node;
a payload of a first egress BH RLC channel exceeds a desired level; and
a payload corresponding to a first routing identity exceeds a desired level.

2. The apparatus according to claim 1, wherein that the payload of a first egress BH RLC channel exceeds a desired level refers to that:
an available buffer size of a first egress BH RLC channel on a first egress link is less than a third threshold, and an available buffer size of a second egress BH RLC channel on a second egress link is greater than a fourth threshold.

3. The apparatus according to claim 1, wherein that the payload corresponding to a first routing identity exceeds a desired level refers to that:
an available buffer size corresponding to a first routing identity is less than a fifth threshold, and an available buffer size corresponding to another routing identity having the same BAP address as the first routing identity is greater than a sixth threshold.

4. The apparatus according to claim 1, wherein the selecting unit performs routing selection when the BH RLF indication is received from the second node, until RLF recovery of the first node is completed and an IAB donor performs routing reconfiguration for the first node.

5. The apparatus according to claim 1, wherein that the selecting unit performs routing selection when the first flow control feedback information is received and the first flow control feedback information indicates that data congestion occurs in a third node comprises that:
the selecting unit reselects a route for a BAP packet intended to be routed to the third node if the first flow control feedback information indicates that an available buffer size of a BH RLC channel is less than a first threshold or indicates that an available buffer size for a routing identity is less than a second threshold.

6. The apparatus according to claim 1, wherein that the selecting unit performs routing selection when the first flow control feedback information is received and the first flow control feedback information indicates that data congestion occurs in a third node comprises that:
the selecting unit reselects a route for a BAP packet intended to be mapped to a BH RLC channel if the first flow control feedback information indicates that an available buffer size of the BH RLC channel is less than a first threshold; and
the selecting unit reselects a route for a BAP packet containing a routing identity in a BAP header if the first flow control feedback information indicates that an available buffer size for the routing identity is less than a second threshold.

7. The apparatus according to claim 1, wherein after the selecting unit performs routing reselection when the first flow control feedback information is received and the first flow control feedback information indicates that data congestion occurs in a third node, the selecting unit stops the routing reselection for an original route if at least one of the following conditions is satisfied that:
a timer started when the data congestion occurs expires; and
second flow control feedback information is received, and the second flow control feedback information indicates that no data congestion occurs in the original route.

8. The apparatus according to claim 2, wherein an identity of the second egress link is indicated by a next hop BAP address IE corresponding to a routing identity in BH routing configuration, and a BAP address corresponding to the routing identity is same as a DESTINATION in a BAP header of a current packet.

9. The apparatus according to claim 2, wherein the second egress BH RLC channel is indicated by an egress BH RLC channel identity IE of an entry in BH RLC channel mapping configuration, an ingress BH RLC channel identity of the entry matching an ingress BH RLC channel of a current BAP packet, an ingress link identity of the entry matching ingress link of the current BAP packet, and an egress link identity of the entry corresponding to the second egress link.

10. The apparatus according to claim 2, wherein the third threshold and the fourth threshold are configured by an IAB donor for the first node.

11. The apparatus according to claim 3, wherein the fifth threshold and the sixth threshold are configured by an IAB donor for the first node.

12. A routing selection apparatus, configured in a first node, the apparatus comprising:
a receiving unit configured to receive a first routing configuration message, the first routing configuration message comprising configuration information corresponding to multiple routing identities, and configuration information corresponding to each routing identity comprising at least one of the following: a priority, hops, and average delay.

13. The apparatus according to claim 12, wherein the apparatus further comprises:
a selecting unit configured to select a routing identity according to the first routing configuration message.

14. The apparatus according to claim 13, wherein,
if routing selection is caused due to that a payload of a first egress BH RLC channel exceeds a desired level, the routing identity selected by the selecting unit satisfies a condition as below:
an available buffer size of a first egress BH RLC channel on a first egress link is less than a third threshold, and an available buffer size of a second egress BH RLC channel on a second egress link corresponding to the selected routing identity is greater than a fourth threshold.

15. The apparatus according to claim 13, wherein,
if routing selection is caused due to that a payload corresponding to a first routing identity exceeds a desired level, the routing identity selected by the selecting unit satisfies a condition as below:
an available buffer size corresponding to the first routing identity is less than a fifth threshold, and an available buffer size corresponding to the selected routing identity is greater than a sixth threshold.

16. The apparatus according to claim 12, wherein the first routing configuration message is provided by an IAB donor via F1AP signaling.

17. The apparatus according to claim 12, wherein,
the priority is a priority of a route recommended by a IAB donor to the first node;
the hops indicate the remaining number of hops reaching a destination address in the routing identity;
and the average delay refers to an average end-to-end delay for a path corresponding to the routing identity observed by the IAB donor within a time window.

18. The apparatus according to claim 12, wherein,
if a value of the priority is a first value, a routing identity corresponding to the priority is used only in a case of BH RLF;
and if a value of the priority is another value than the first value, the value of the priority indicates a priority of a corresponding routing identity, and the first node performs routing selection according a priority indicated by the another value.

19. A routing selection apparatus, configured in an IAB donor, the apparatus comprising:
a first transmitting unit configured to transmit a first routing configuration message to a first node, the first routing configuration message being used for selecting a routing identity by the first node and comprising configuration messages corresponding to multiple routing identities, and a configuration message corresponding to each routing identity comprising at least one of the following: a priority, hops, and average delay.

20. The apparatus according to claim 19, wherein the apparatus further comprises:
a second transmitting unit configured to transmit a second routing configuration message to the first node, the second routing configuration message being used for enabling or disabling the routing selection.
